# EUROPEAN PATENT APPLICATION

(11) **EP 3 957 901 A1**
(43) Date of publication of application: **23.02.2022**
(21) Application number: 20215000.9
(22) Date of filing: 17.12.2020
(51) Int. Cl.: F21S 6/00, F21S 19/00, F21V 8/00, F21Y 113/17, F21Y 115/10

(54) **COMBUSTIBLE ELECTRONIC CANDLE**

(30) Priority: 19.08.2020 CN 202010837562
(71) Applicant: Nantong Ya Tai Candle Arts & Crafts Co., Ltd., Tongzhou district Nantong City Jiangsu 226326 (CN)
(72) Inventor: DING, Yingqi, Nantong City, Jiangsu, 226326 (CN)
(74) Representative: Klunker IP Patentanwälte PartG mbB

(57) **Abstract**

The present invention belongs to the field of candles and provides a combustible electronic candle comprising a wax body, in the lower part of which an electronic light-emitting part is provided, wherein the electronic light-emitting part comprises a light-transmitting isolaltion hood, a first light emitter, an electronic control device and a power source; the first light emitter is closely attached to the middle part of the lower surface of the light-transmitting isolaltion hood; a light guide is fixed at the middle part of the upper surface of the light-transmitting isolaltion hood, and a combustible sleeve is wrapped outside the light guide; the light guide and the combustible sleeve pass through the wax body above the light-transmitting isolaltion hood and extend out of the upper surface of the wax body; light emitted by the first light emitter is transmitted through the light-transmitting isolaltion hood to be irradiated to the lower part of the light guide; the light guide transmits the light to the top part of the electronic candle; and the first light emitter is electrically connected to the power source through the electronic control device. The present invention can realize electronic illumination while also meeting the demand for traditional ignition illumination and solving the problems of single function and unsatisfactory illumination effects of traditional electronic candles.

## Description

### Technical field

The present invention relates to the field of candles, and in particular to a combustible electronic candle.

### Technical background

Since the advent of electronic candles, due to their safe, convenient, energy-saving and environmentally friendly use, they have been popular with more and more people, especially in European and American countries, and there is a tendency to gradually replace traditional fire candles.

However, although the existing electronic candles have electronic control circuits, they have few functions and low simulation. Some have timing functions, but their designs are not humanized and they have high energy consumption. Moreover, these candles have a single lighting effect. All of these limit the applications of the electronic candles.

In addition, most of the traditional electronic candles use lamp beads or bulbs as flame heads, and the simulation effect is not obvious. Furthermore, the current electronic candles on the market cannot realize the multi-directional and multi-level three-dimensional illumination effect of the wax body, and cannot meet the usage demand for traditional ignition illumination.

### Summary of the invention

The technical problem to be solved by the present invention is to provide a combustible electronic candle, which can realize electronic illumination while also meeting the demand for traditional ignition illumination and solving the problems of single function and unsatisfactory illumination effects of traditional electronic candles.

The technical solution provided by the present invention is as follows:
A combustible electronic candle, comprising a wax body, in the lower part of which an electronic light-emitting part is provided, wherein the electronic light-emitting part comprises a light-transmitting isolaltion hood, a first light emitter, an electronic control device and a power source; the first light emitter is closely attached to the middle part of the lower surface of the light-transmitting isolaltion hood; a light guide is fixed at the middle part of the upper surface of the light-transmitting isolaltion hood, and a combustible sleeve is wrapped outside the light guide; the light guide and the combustible sleeve pass through the wax body above the light-transmitting isolaltion hood and extend out of the upper surface of the wax body; light emitted by the first light emitter is transmitted through the light-transmitting isolaltion hood to be irradiated to the lower part of the light guide; the light guide transmits the light to the top part of the electronic candle; and the first light emitter is electrically connected to the power source through the electronic control device.

Further, the light-transmitting isolaltion hood is made of flame-retardant insulating material, and the light guide is an optical fiber wire.

Further, the light-transmitting isolaltion hood is a central recessed structure or a flat structure, the middle part of the light-transmitting isolaltion hood is provided with a fixing sleeve for fixing the light guide, and the fixing sleeve and the first light emitter are located on the same vertical center line.

Further, the wax body is a mixture of paraffin wax and microcrystalline wax.

Further, the light-transmitting isolaltion hood is made of a colored material.

Further, the combustible sleeve extends along the top part of the light guide to above the fixing sleeve, and the combustible sleeve is a knitted cotton thread sleeve or a paper sheet sleeve.

Further, the electronic light-emitting part further comprises several second light emitters disposed below the light-transmitting isolaltion hood therein, the second light emitter is connected in parallel with the first light emitter, the second light emitter is a multicolor LED lamp bead, the multicolor LED lamp bead is integrated with three dies of red light, green light and blue light therein, and the electronic control device controls the multicolor LED lamp bead to adjust the color of illumination.

Further, a control switch is installed at the bottom part of the electronic light-emitting part, the control switch is electrically connected to the power source, and the power source is a battery or an accumulator, and is detachable for replacement.

Further, a remote-control module is electrically connected on the electronic control device, the remote-control module wirelessly communicates with an external remote controller, and a switch button, multiple sets of dimming buttons and multiple sets of timer buttons are provided on the remote controller.

Further, a candle cup is further sleeved outside the wax body, and the bottom part of the candle cup is provided with a fixed opening for accommodating the electronic light-emitting part.

Compared with the prior art, the beneficial effects of the present invention are as follows:
(1) The combustible electronic candle of the present invention, through wrapping the light guide with the combustible sleeve and cooperating with the electronic light-emitting part in the wax body for illumination, can realize electronic illumination while also meeting the demand for traditional ignition illumination and solving the problems of single function and unsatisfactory illumination effects of traditional electronic candles.
(2) The combustible electronic candle of the present invention provides illumination through the ambient light of the electronic light-emitting part, and looks very beautiful through the semi-transparent wax body. Further, the top wick can not only be illuminated by the light guide, but also can be illuminated by ignition and combustion, so as to realize the multi-directional and multi-level three-dimensional illumination effect of the wax body as a whole.
(3) The combustible electronic candle of the present invention can not only prevent the wax body from dripping into the electronic light-emitting part after burning and melting, but also prevent the flame from continuously burning to the electronic light-emitting part and damaging the electronic equipment. In this way, the electronic equipment under the light-transmitting isolaltion hood can be reused. To realize the continuous use of the electronic candle, it is only necessary to replace the wax body and the combustible sleeve with the light guide matched with it, clean the light-transmitting isolaltion hood and insert it into the new wax body, and position the first light emitter corresponding to the light guide.
(4) The combustible electronic candle of the present invention, through the recessed design of the light-transmitting isolaltion hood, can not only focus light around, but also collect the wax body after burning, which prevents the wax body from dripping around after melting, causing the subsequent electronic light-emitting part to be unable to be disassembled. Further, the lamp bead adopts a multi-color integrated design, which is convenient for users to adjust the light-emitting color as needed, and improves the illumination aesthetic effect of the electronic candle.

### Brief description of the drawings

Fig. 1 is a schematic view of an overall structure of a combustible electronic candle according to the present invention;
Fig. 2 is a schematic view of an overall structure of another embodiment of the combustible electronic candle according to the present invention;
Fig. 3 is a structural enlarged view of a light guide and a combustible sleeve of the combustible electronic candle according to the present invention;
Fig. 4 is a structural enlarged view of a second light emitter of the combustible electronic candle according to the present invention; and
Fig. 5 is a schematic view of an overall structure of a remote controller according to the present invention;

Reference numbers are as follows:
1. wax body; 2. fixing sleeve; 3. light-transmitting isolaltion hood; 4. first light emitter; 5. electronic control device; 6. power source; 7. light guide; 8. combustible sleeve; 9. control switch; 10. remote control module; 11. remote controller; 12. switch button; 13. dimming button; 14. timer button; 15. second light emitter.

### Detailed description of the embodiments

In the following, the present invention will be further described in detail with reference to the drawings and embodiments. It should be understood that specific embodiments described herein are only used to explain the present invention and are not intended to limit the present invention.

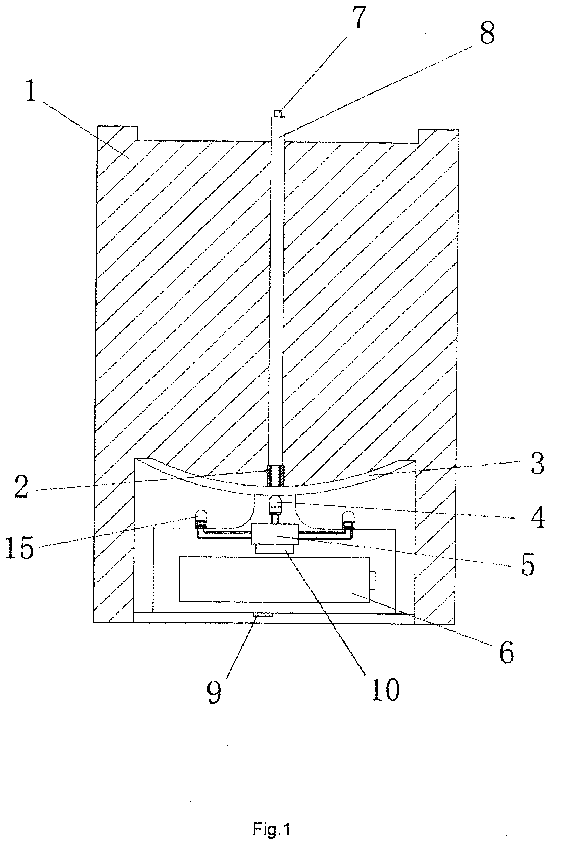

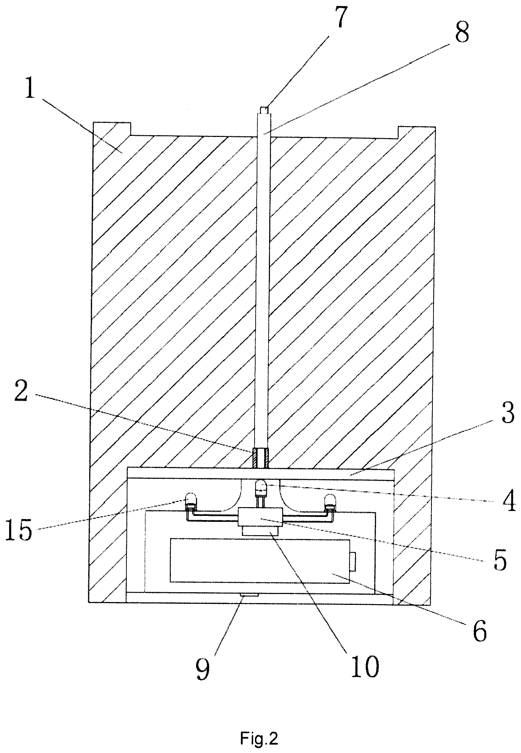

As shown in Figs. 1-5, a combustible electronic candle includes a wax body 1, and an electronic light-emitting part is provided in the lower part of the wax body 1. The electronic light-emitting part includes a light-transmitting isolaltion hood 3, a first light emitter 4, an electronic control device 5 and a power source 6. The first light emitter 4 is closely attached to the middle part of the lower surface of the light-transmitting isolaltion hood 3. A light guide 7 is fixed at the middle part of the upper surface of the light-transmitting isolaltion hood 3, and a combustible sleeve 8 is wrapped outside the light guide 7. The light guide 7 and the combustible sleeve 8 pass through the wax body 1 above the light-transmitting isolaltion hood 3 and extend out of the upper surface of the wax body 1. Light emitted by the first light emitter 4 is transmitted through the light-transmitting isolaltion hood 3 to be irradiated to the lower part of the light guide 7. The light guide 7 transmits the light to the top part of the electronic candle. The first light emitter 4 is electrically connected to the power source 6 through the electronic control device 5.

The combustible sleeve 8 wraps the light guide 7 and cooperates with the electronic light-emitting part for illumination, which can realize electronic illumination while also meeting the demand for traditional ignition illumination. The first light emitter 4 can not only transmit light to the top part of the light guide 7 for illumination, and the light emitted by the first light emitter 4 can illuminate the inside of the wax body to form ambient light. The light-transmitting isolaltion hood 3 can isolate the wax droplets and flames after burning to avoid damaging the electronic components in the electronic light-emitting part.

During use of the electronic candle, after being powered-on, the first light emitter 4 as a light source emits light, and the light is transmitted through the light-transmitting isolaltion hood 3 to be irradiated to the lower end of the light guide 7. The light is transmitted through the light guide 7 to the top part of the electronic candle for illumination, so as to simulate the illumination effect of the candle wick being ignited. In addition, the combustible sleeve 8 wrapped outside the light guide 7 can also be ignited. Since the flame temperature of the combustible sleeve after burning is higher than the melting point of the light guide 7 and lower than the ignition point of the light guide 7, the light guide 7 will not be ignited during the burning process of the wax body 1 and the combustible sleeve 8, but it is only melted. If the candle is blown out, the light guide 7 will immediately solidify by itself, and the top part can still be illuminated by light, which does not affect the continuous use of the electronic candle, but only changes in the brightness of illumination.

In some embodiments of the present invention, the light-transmitting isolaltion hood 3 is a flame-retardant insulating glass sheet or plastic sheet, and the light guide 7 is an optical fiber wire. The design of the translucent sheet is to make the light emitted from the first light emitter 4 not only directly irradiate on the light guide 7, but also diverge through the light-transmitting isolaltion hood 3 and irradiate onto the wax body 1 to expand the illumination range of ambient light. At the same time, it can distinguish the intensity of light and realize the layering effect.

In some embodiments of the present invention, the light-transmitting isolaltion hood 3 is a central recessed structure or a flat structure, the middle part of the light-transmitting isolaltion hood 3 is provided with a fixing sleeve 2 for fixing the light guide 7, and the fixing sleeve 2 and the first light emitter 4 are located on the same vertical center line. This design is also convenient for subsequent disassembly and use during which the light guide 7 can be quickly aligned and placed into the fixing sleeve 2 to realize the collinear and precise positioning of the light guide 7 and the first light emitter 4, and ensure the highest light-emitting intensity on the top part of the light guide 7.

In some embodiments of the present invention, the wax body 1 is a mixture of paraffin wax and microcrystalline wax, or a mixture of paraffin wax and soybean wax. Using this mixed ingredient, especially adding the microcrystalline wax or soybean wax, can improve the overall transparency of the wax body 1 and improve the light transmission effect.

In some embodiments of the present invention, the glass sheet or plastic sheet is made of a colored material, and a certain color is added through the light-transmitting isolaltion hood 3, so that the light transmission effect of the first light emitter 4 is immediately changed, improving the aesthetic effect of the ambient light.

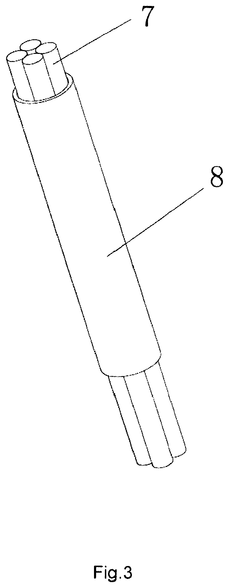

In some embodiments of the present invention, as shown in Figs. 1 and 3, the combustible sleeve 8 extends along the top part of the light guide 7 to above the fixing sleeve 2, and the combustible sleeve 8 is a woven cotton thread sleeve or a paper sheet sleeve.

The length of the combustible sleeve 8 ends above the fixing sleeve 2 to ensure the full combustion of the upper part of the wax body 1. Moreover, after the flame burns to the end of the combustible sleeve 8, since the ignition point of the light guide 7 such as the general optical fiber is higher than its melting point, it cannot continue to burn without an ignition source, that is, the upper part of the wax body 1 and the combustible sleeve 8 are both exhausted and the light guide 7 stops burning. At this time, the light guide 7 is exposed in the fixing sleeve 2, and the top part of the light guide 7 is still illuminated, which does not affect the continuous use of the electronic candle.

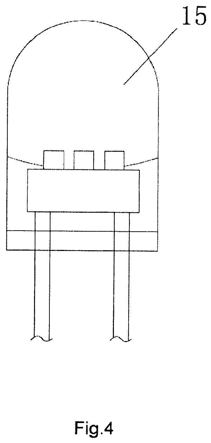

In some embodiments of the present invention, as shown in Fig. 4, the electronic light-emitting part further includes several second light emitters 15 disposed below the light-transmitting isolaltion hood 3 therein. The second light emitter 15 is connected in parallel with the first light emitter 4. The second light emitter 15 is a multicolor LED lamp bead. The multicolor LED lamp bead is integrated with three dies of red light, green light and blue light therein. The electronic control device 5 controls the multicolor LED lamp bead to adjust the color of illumination.

The LED lamp bead with three-color dies can not only realize illumination switching of individual colors, but also combine illumination to realize the RGB multi-color illumination effect, greatly improving the aesthetics of the ambient light.

In some embodiments of the present invention, a control switch 9 is installed at the bottom part of the electronic light-emitting part. The control switch 9 is electrically connected to the power source 6. The power source 6 is a battery or an accumulator, and is detachable for replacement.

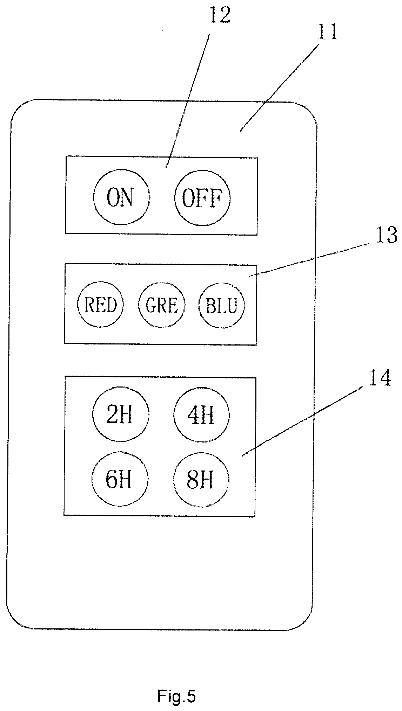

In some embodiments of the present invention, as shown in Figs. 1 and 5, a remote-control module 10 is electrically connected on the electronic control device 5. The remote-control module 10 wirelessly communicates with an external remote controller 11. A switch button 12, multiple sets of dimming buttons 13 and multiple sets of timer buttons 14 are provided on the remote controller 11. Among them, the multiple sets of dimming buttons 13 can be controlled individually or in combination to realize the illumination effect of adjusting RGB multi-color light.

In some embodiments of the present invention, a candle cup is further sleeved outside the wax body 1, and the bottom part of the candle cup is provided with a fixed opening for accommodating the electronic light-emitting part.

An outer container is added outside the wax body 1 to improve the packaging and use aesthetics of the overall electronic candle. At the same time, after the wax body 1 is burned out, only the wax body 1 and the light guide 7 wrapped with the combustible sleeve 8 need to be replaced, and the candle cup and the electronic light-emitting part can also be reused, thereby increasing the service life of the product and reducing the customer's use cost.

In summary, the combustible electronic candle of the present invention has a novel structure, simple operation, low cost, long service life, high illumination effect and high aesthetics. It can realize electronic illumination while also meeting the demand for traditional ignition illumination. It can be reused for multiple purposes, greatly reducing the production and manufacturing costs and the users' use costs.

It needs to be noted that in the drawings or the text of the specification, the implementations that are not shown or described are all forms known to those of ordinary skill in the art, and are not described in detail. In addition, the above definitions of various elements and methods are not limited to the various specific structures, shapes or manners mentioned in the embodiments.

It also needs to be noted that examples of parameters including specific values may be provided herein, but these parameters do not need to be exactly equal to the corresponding values, but may be approximated to the corresponding values within acceptable error tolerances or design constraints. The directional terms such as "upper", "lower", "front", "rear", "left" and "right" mentioned in the embodiments are only directions with reference to the drawings, and are not intended to limit the scope of protection of the present application.

The above description shows and describes the preferred embodiments of the present invention. As described previously, it should be understood that the present invention is not limited to the form disclosed herein. It should not be considered as an exclusion from other embodiments, and can be used for various other combinations, modifications, and environments. Moreover, it can be modified through the above teachings or techniques or knowledge in related fields within the scope of concept of the present invention described herein. Also, the modifications and changes made by those skilled in the art without departing from the spirit and scope of the present invention should fall within the protection scope of the appended claims of the present invention.

## Claims

1. A combustible electronic candle, comprising a wax body, in the lower part of which an electronic light-emitting part is provided, **characterized in that** the electronic light-emitting part comprises a light-transmitting isolaltion hood, a first light emitter, an electronic control device and a power source; the first light emitter is closely attached to the middle part of the lower surface of the light-transmitting isolaltion hood; a light guide is fixed at the middle part of the upper surface of the light-transmitting isolaltion hood, and a combustible sleeve is wrapped outside the light guide; the light guide and the combustible sleeve pass through the wax body above the light-transmitting isolaltion hood and extend out of the upper surface of the wax body; light emitted by the first light emitter is transmitted through the light-transmitting isolaltion hood to be irradiated to the lower part of the light guide; the light guide transmits the light to the top part of the electronic candle; and the first light emitter is electrically connected to the power source through the electronic control device.

2. The combustible electronic candle according to claim 1, **characterized in that** the light-transmitting isolaltion hood is made of flame-retardant insulating material, and the light guide is an optical fiber wire.

3. The combustible electronic candle according to claim 2, **characterized in that** the light-transmitting isolaltion hood is a central recessed structure or a flat structure, the middle part of the light-transmitting isolaltion hood is provided with a fixing sleeve for fixing the light guide, and the fixing sleeve and the first light emitter are located on the same vertical center line.

4. The combustible electronic candle according to claim 1, **characterized in that** the wax body is a mixture of paraffin wax and microcrystalline wax.

5. The combustible electronic candle according to claim 2, **characterized in that** the light-transmitting isolaltion hood is made of a colored material.

6. The combustible electronic candle according to claim 3, **characterized in that** the combustible sleeve extends along the top part of the light guide to above the fixing sleeve.

7. The combustible electronic candle according to any one of claims 1-6, **characterized in that** the electronic light-emitting part further comprises several second light emitters disposed below the light-transmitting isolaltion hood therein, the second light emitter is connected in parallel with the first light emitter, and the second light emitter is a multicolor LED lamp bead.

8. The combustible electronic candle according to any one of claims 1-6, **characterized in that** a control switch is installed at the bottom part of the electronic light-emitting part, the control switch is electrically connected to the power source, and the power source is a battery or an accumulator, and is detachable for replacement.

9. The combustible electronic candle according to claim 7, **characterized in that** a remote-control module is electrically connected on the electronic control device, the remote-control module wirelessly communicates with an external remote controller, and a switch button, multiple sets of dimming buttons and multiple sets of timer buttons are provided on the remote controller.

10. The combustible electronic candle according to any one of claims 1-6, **characterized in that** a candle cup is further sleeved outside the wax body, and the bottom part of the candle cup is provided with a fixed opening for accommodating the electronic light-emitting part.
